# EUROPEAN PATENT APPLICATION

(11) **EP 2 086 186 A1**
(43) Date of publication of application: **05.08.2009**
(21) Application number: 08290099.4
(22) Date of filing: 01.02.2008
(51) Int. Cl.: H04L 12/56

(54) **Traffic control device, packet-based network and method for controlling traffic in a packet-based network**

(71) Applicant: Alcatel Lucent, 75008 Paris (FR)
(72) Inventor: Domschitz, Peter, 70191 Stuttgart (DE); Klotsche, Ralf, 75305 Neuenbürg (DE); Oberle, Karsten, 68199 Mannheim (DE)
(74) Representative: Kohler Schmid Möbus

(57) **Abstract**

A traffic control device (50) for a Quality of Service-aware packet-based network (10) comprises detection means (52) for detecting packet flows in a packet stream (46) by preferably repeatedly performing a data packet inspection on the packet stream (46), the data packet inspection being neither based on signaling information nor on application awareness, determining means (54) for determining a flow parameter, in particular a flow rate, of at least one of the detected packet flows, assignment means (56) for generating assignment information assigning a resource of the packet-based network (10) to the at least one detected packet flow in dependence of the detected flow parameter, and sending means (58) for sending the assignment information to a resource control device (44) for causing the resource control device (44) to allocate the assigned resource. In such a way, reliable and cost-efficient quality of service management in a packet-based network (10) is facilitated.

## Description

The invention relates to a traffic control device for a Quality of Service-aware packet-based network and to a packed-based network comprising such a traffic control device. Further, the invention relates to a method for controlling traffic in a Quality-of-Service-aware packet-based network, and to a computer program product adapted to perform the method.

Many access systems like WiMAX^{™} are built on the assumption that data flows of different nature are separated into different traffic classes, for example by means of signaling. Under this assumption, an optimal performance according to transport data rates, delay, jitter, packet loss, etc. can be attained. For example, the SIP signaling in case of IMS (Internet Protocol Multimedia Subsystem) informs the packet network about service requirements using multiple parameters listed in a dedicated session description signaling message element (SIP = session initiation protocol). However, for a majority of Internet-style applications this is not a valid assumption. There is no signaling link or primitives between applications and the networking stratum. There is no support by the standard operating systems and application programmers' interfaces. Therefore, the required information describing the nature of the traffic necessary for controlling the networking resources is simply not available. Only in special cases flow information is per se available (e.g. hand-crafted) to facilitate a preconfiguring of a flow detection and of a classification logic. As a consequence, all applications - even the streaming-oriented ones - are mapped to the best effort QoS class (QoS = Quality of Service). As a consequence, the transport of the real-time applications is suboptimal, which may render a service even unusable under heavy load situations.

The usual answer to address the described problem is an introduction of application-specific proxy elements. A proxy element is a module which processes the traffic data flow and tries to detect in-band or out-band signaling information of streaming protocols. For many protocols this requires even a stateful implementation. Such proxy concepts are application-specific and tend to be quite expensive. The main problem is a principle one: Internet applications are built as network-agnostic end-to-end applications, which do not consider any (network) elements in-between. Such application protocols are regularly modified, and new application protocols are introduced without notice. Many applications are designed to communicate only with applications of one single vendor, leading to incompatible interpretations of parameters among applications of different vendors. As a consequence, proxy implementations have to be frequently adapted to new protocol variants. Finally, there remains the risk of misinterpretation, which can disturb a service completely. For any new application usually a new proxy is required. In summary, building proxies is a painful, expensive, and risky business. Thus, protocol changes or vendor-specific variants of application-specific protocols are not a rare case for Internet-style applications and affect deployed products.

### Object of the Invention

Therefore, it is an object of the present invention to provide a traffic control device and a packet-based network which facilitate a reliable and cost-efficient quality of service management of the packet-based network. Further, it is an object of the present invention to provide a method and a computer program product which facilitate a reliable and cost-efficient quality of service management in a packet-based network.

### Summary of the Invention

This object is solved by the features of the independent claims. Advantageous embodiments of the invention are defined by the dependent claims.

According to the invention, the traffic control device comprises detection means for detecting packet flows in a packet stream by preferably repeatedly performing a data packet inspection on the packet stream, the data packet inspection being neither based on signaling information nor on application awareness, determining means for determining a flow parameter, in particular a flow rate, of at least one of the detected packet flows, assignment means for generating assignment information assigning a resource of the packet-based network to the at least one detected packet flow in dependence of the determined flow parameter, and sending means for sending the assignment information to a resource control device for causing the resource control device to allocate the assigned resource, the assignment information preferably aging out automatically.

The packet stream typically comprises the collectivity of data which passes through the traffic control device (aggregate of packet flows). A packet flow is defined as a unidirectional sequence of data packets all sharing the same source and destination IP-address, source and destination port and IP protocol (5-tuple). For detecting the packet flows in the packet stream, a deep data packet inspection is performed on the passing packet stream, i.e. the 5-tuple information is retrieved from the header of each passing data packet, and data packets sharing the same 5-tuple information are assigned to the same packet flow. The detected packet flow is used for the determination of at least one traffic flow parameter, which may be a flow rate of the packet flow, a quantity which is derived from the flow rate, or a QoS class which may be derived from certain characteristics of the flow, e.g. by identifying bulk traffic or synchronous streaming. The flow rate can be defined as the number of bytes per time unit which is contained in the passing packet flow, the number of bytes in each packet being also determined by inspecting the header of the packets. In dependence on the determined traffic flow parameter, assignment information is generated for assigning a resource of the packet network to the packet flow.

The data packet inspection, the determination of the flow parameter as well as the generating and reporting of assignment information to a resource control device may be repeatedly, preferably periodically performed. In case that the assignment information ages out automatically (soft-state), only the start of a new (previously undetected) packet flow has to be identified in the traffic control device, the traffic control device not being forced to follow the individual packet flows for detecting their endpoints. The assignment information may age out either after a given time interval, or based on an autonomous decision of the resource control device.

The assignment information which is generated in the way described above may be at least one policing parameter, the resource control device being a Policy Enforcement Point (PEP). The PEP may reserve bandwidth and QoS for the detected packet flows (and possibly signaled packet flows) based on the at least one policing parameter.

Preferably, the assignment means is adapted to generate the assignment information in dependence of a flow parameter selected from the group consisting of: mean flow rate, minimum flow rate, and maximum flow rate of the packet flow. The determined flow parameters may be mapped to parameters used in standard policing algorithms such as the token bucket algorithm or the leaky bucket algorithm. For example, the mean flow rate may be used to define the replenish rate of the token bucket algorithm, the minimum and maximum flow rate being mapped to the upper and lower thresholds of the token bucket algorithm.

The inventive traffic control device may further comprise means for determining a resulting change of the traffic flow parameter and means for determining and storing a relation between a resulting change of traffic flow parameters and a change of resource allocation. The resulting change of the traffic flow parameter may result from a change of the resource allocation performed by the resource control device. The generation of assignment information may then be dependent on the stored relation and may also be dependent on a priority of a traffic-type of a packet flow contained in the packet stream.

The assignment means of the inventive traffic control device may also generate revocation information in dependence on the determined flow parameter for canceling an assignment of a resource of the packet-based network to a passing packet flow, e.g. when the flow rate is reduced to zero (hard state).

According to another aspect of the invention a packed-based network comprises a core network, at least one packet access network operatively connected to the core network, a traffic control device as described above, preferably located at an edge node between the core network and the at least one packet access network, a resource control device for allocating resources of the packet-based network assigned to packet flows, and a control path for operatively connecting the traffic control device to the resource control device.

In an advantageous embodiment of the inventive packet-based network the resource control device is adapted to additionally receive signaling information, in particular IMS signaling information, for allocating resources of the packet-based network assigned to signaled packet flows. In such a way, the resource control device is capable to assign resources to both signaled and detected packet flows.

It is further advantageous if the resource control device is adapted to allocate a resource assigned to a detected packet flow only for a fixed time interval, the fixed time interval being preferably defined in the assignment information from the traffic control device. In such a way, a soft-state is implemented which makes the surveillance of the packet flows for detecting their endpoints unnecessary. Alternatively or in addition, the resource control device may apply an algorithm which dynamically modifies, in particular drops the resource allocation for the detected packet flow in case that the allocated resources are needed for another packet flow, e.g. a signaled packet flow containing high-priority data.

In another inventive embodiment the resource control device of a first packet access network is adapted to transmit the assignment information to a resource control device of a second packet access network in case that a handover of the packet flow from the first to the second packet access network occurs. In such a way, the assignment information can be used in the second resource control device and no re-learning is required. Alternatively, in case that two or more traffic control devices are present in the network, one for each packet access network, the flow parameters and assignment information for the traffic flow for which the handover is performed may also be transferred directly between the traffic control devices.

Preferably, a first packet access network is a wireless network and a second packet access network is a fixed network. Also in this case, only one traffic control device may be provided to serve both packet access networks, the control paths and interfaces of the traffic control device being adapted to both types of packet access networks.

According to another aspect of the invention a method for controlling traffic in a Quality of Service-aware packet-based network comprises: detecting packet flows in a packet stream by preferably repeatedly performing a data packet inspection on the packet stream in a traffic control device, the data packet inspection being neither based on signaling information nor on application awareness; determining a flow parameter, in particular a flow rate, of at least one of the detected packet flows, for example by estimation, generating assignment information assigning a resource of the packet-based network to the at least one detected packet flow in dependence of the determined flow parameter, and sending the assignment information to a resource control device for causing the resource control device to allocate the assigned resource, the assignment information preferably aging out automatically after a given time interval.

In a preferred variant the sending of assignment information is, preferably periodically, repeated. The time scale for a repeated sending of the assignment information is preferably several seconds.

In a further preferred variant, the method comprises: attributing each detected packet flow to one of a plurality of quality-of-service, QoS, classes in dependence on the determined flow parameter, and sending the assignment information comprising the attributed QoS class to the resource control device. Based on the characteristics of the development of the flow, in particular of the flow rate, specific types of data flows (e.g. bulk or streaming) maybe identified even without signaling from the application, each type of data flow corresponding to one of a plurality of QoS classes. For the mapping of the characteristics of the packet flows to the QoS classes, autonomous learning algorithms may be used for which feedback from the resource control device may be implemented. In particular, in the way described above, it may also be possible to detect low priority traffic and to provide a less-than-best-effort class.

The invention also relates to a computer program product adapted to perform all the steps of the method described above.

Further features and advantages are stated in the following description of exemplary embodiments, with reference to the figures of the drawing, which shows significant details, and are defined by the claims. The individual features can be implemented individually by themselves, or several of them can be implemented in any desired combination.

### Brief Description of the Drawings

Now, exemplary embodiments of the invention will be described in detail with reference to the enclosed figures.
- Fig. 1: shows a schematic block diagram with a basic architecture of a conventional packet network employing IMS;
- Fig. 2: shows a block diagram with architecture of a packet network according to a first embodiment of the invention;
- Fig. 3: shows a block diagram with architecture of a packet network according to a second embodiment of the invention; and
- Fig. 4: shows a block diagram with architecture of a packet network according to a fifth embodiment of the invention.

### Detailed Description of Preferred Embodiments

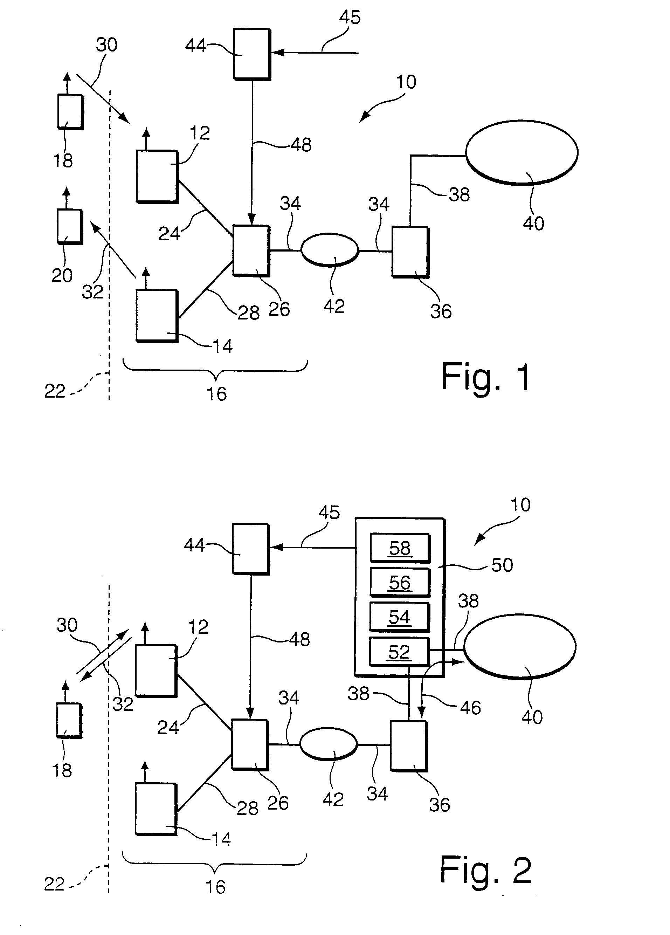

Fig. 1 shows a schematic block diagram with a basic architecture of a conventional packet-based network 10 employing IMS. First and second base stations 12, 14 are part of a wireless access network 16 and serve for first 18 and second 20 customer premises equipments. The wireless access network 16 employs the WiMAX^{™} standard.

In an upstream direction 30, the base station 12 receives signaling packets and data packets from the first customer premises equipments 18 via a radio interface 22 and forwards the signaling and data packets via a first transmission link 24 to a wireless access controller 26 (WAC).

In a first scenario the wireless access controller 26 forwards the data packets from the first customer premises equipment 18 to the second customer premises equipment 20 via the same first transmission link 24 and via the same first base station 12.

In the illustrated second scenario the wireless access controller 26 forwards the data packets originating from the first customer premises equipment 18 to the second customer premises equipment 20 via a second transmission link 28 and via a second base station 14. Each of the customer premises equipments 18, 20 may send and receive signaling packets and data packets. The first base stations 12 may forward data packets received from an upstream transmission 30 to the wireless access controller 26 via the first transmission link 24. Also the second base station 14 may forward data packets received from an upstream transmission to the wireless access controller 26 via the second transmission link 28. The wireless access controller 26 may receive data packets from an edge node 36 via a third transmission link 34 and forward these data packets via the first transmission link 24 and via the first base station 12 on a downstream to the first customer premises equipment 18. Correspondingly, the wireless access controller 26 may receive data packets from the edge node 36 via the third transmission link 34 and forward these data packets via the second transmission link 28 and via the second base station 14 on a downstream 32 to the second customer premises equipment 20.

In a third scenario data packets are received from one of the first 24 and second 28 transmission links and forwarded via the third transmission link 34 and via the edge node 36 and via a fourth transmission link 38 into a core network 40. Each of the first to fourth transmission links 24, 28, 34, 38 may comprise one or more switches or switching networks. Thereof, in the figure, only a switching network 42 within the third transmission link 34 is illustrated. The core network 40 may be an IMS core network or a Best Effort Internet (BE Internet).

In a fourth scenario the wireless access controller 26 receives data packets from the core network 40 via the fourth transmission link 38, via the edge node 36 and via the third transmission link 34. Preferably, the edge node 36 is located at premises dedicated for the core network 40. Therefore, the fourth transmission link 38 is preferably a transmission link in a physically protected environment or is encrypted.

The wireless access network 16 comprises a resource control device 44. The resource control device 44 is provided to control an allocation of resources of the wireless access network 16 to packet flows which pass through the wireless access network 16. The resource control device 44 may also be provided to control an allocation of resources to packet flows offered to the wireless access network 16 by the first 18 or second 20 customer premises equipment, or by the third transmission link 34 from the edge node 36. For packet flows which are offered to the wireless access network, signaling via a first signaling link serving as a control path 45 may be provided. The resource control device 44 may allocate a resource of the wireless access network 16 to the packet flow by using the signaling information. The resource control device 44 may also actively withdraw a resource of the wireless access network 16 from the packet flow. The resource to be allocated may be a portion or a function of the first 12 or second 14 base stations, of the first 24, second 28 or third 34 transmission links, or of the wireless access controller 26, the resource being allocated by the resource control device 44 via a resource allocation path 48. The same applies to the resource to be withdrawn. Each of the customer premises equipments 18, 20 may be either a fixed station or a mobile station.

Unless the detailed description of the figures 2 to 4 differs, the above description also applies to the embodiments illustrated by figures 2 to 4.

Fig. 2 shows a block diagram with architecture of a packet network 10 according to a first embodiment of the invention. Therein, a traffic control device 50 is arranged at the fourth transmission link 38.

The traffic control device 50 comprises detection means 52 for detecting packet flows in a passing packet stream 46, determining means 54 for determining a traffic flow parameter, assignment means 56 for generating assignment information, and sending means 58 for sending the assignment information to the resource control device 44.

The detection means 52 for detecting packet flows employs a data packet inspection function to execute measurements on the passing packet stream 46, the latter being an aggregate of packet flows. By extracting 5-tuple information from the headers of the packets of the packet stream 46 (deep packet inspection), individual flows can be detected in the packet stream, the packets attributed to the same packet flow being characterized by identical 5-tuples.

The determining of the traffic flow parameters is based on measurements on the detected packet flows. For example, a flow rate corresponding to a number of bytes per time interval (e.g. per second) may be measured as a flow parameter and assignment information (policing parameters) may be calculated or estimated based on the measured flow rate, e.g. by calculating the derivative, the mean, maximum or minimum of the flow rate. Other flow parameters can be determined in addition to or instead of the ones described above. The flow parameters thus determined may resemble or may be identical to those derived from signaling protocols (in case of signaling according to the state of the art) and can be used in the devices that already perform policing according to the state of the art, such as the resource control device 44. Thus, the inventive traffic control device 50 may constitute a supplement for existing network resource control based on signalling. In particular, a QoS class of the packet flow may be determined based on the characteristics of the flow (e.g. bulk traffic or continuous flow).

In dependence of the determined flow parameter, assignment information is generated in order to assign an available resource of the packed-based network 10 to the detected packet flow. If for example, the determining means 54 for determining traffic flow parameters evaluates that a traffic flow using a certain port number exceeds a predefined volume (which may be considered as a traffic flow parameter), the determining means 54 may assign an additional resource of the packet network 10 to the packet stream 46. The additional resource may be an additional transport capacity at resource controlling network elements as base stations 12, 14 base station controller 26 or edge nodes 36 within a space multiplex system, a time multiplex system, a code multiplex system, or a frequency multiplex system employed by the packet-based network 10. The determined assignment information is then sent to the resource control device 44 via a control path 45 to cause the resource control device 44 to allocate the assigned resource of the packet network 10, in particular the wireless access network 16, to the packet flow via a resource allocation path 48.

In particular, the assignment information which is sent to the resource control device 44 may correspond to one or more policing parameters of a policing algorithm which is implemented in the resource control device 44. In this case, the determined flow parameters are mapped to policing parameters of the policing algorithm, e.g. of the token bucket or leaky bucket algorithm. For example, the mean flow rate (average flow rate over a given time interval) may be mapped to a replenish rate of the token bucket algorithm, or the minimum and maximum values of the flow rate (in a given time interval) may be mapped to minimum and maximum thresholds of the token bucket algorithm. As in this case, the policing parameters provided to the resource control device 44 may be identical to those which are used for signaled packet flows (e.g. VoIP), the modifications of the resource control device 44 which are required to perform resource allocation both for signaled and detected packet flows are minimal.

The assignment information or the allocation of the assigned resource, respectively, may preferably age out automatically (soft-state), either after a given time interval (defined by the traffic control device 50 or by the resource control device 44) or by an autonomous decision of the resource control device 44. In such a way, the traffic control device 50 does not have to monitor the evolution of the detected packet flows for determining the endpoints of the packet flows. Alternatively, it is possible to perform a session setup with explicit release (hard-state), modify messages being transferred from the traffic control device 50 to the resource control device 44 to report parameter changes (could be a re-setup).

In the embodiment described above with reference to Fig. 2, the resource allocation is performed on data flows which are transported from the core network 40 to the access network 16. However, it is also possible to control the resource allocation of data flows in the opposite direction, i.e. from the access network 16 to the core network 40, in an analogous way. In this case, the upstream flow starts with best effort behavior (best effort QoS class) and passes the ingress network elements 24, 26, 28, 34 to the traffic control device 50 for the first packets until the traffic control device 50 learns the correct QoS class by inspecting the packets of the packet flow. The assignment information is then reported down to the source element 12, 14 (client in the access case) via the resource control means 44, for example via TISPAN RACS or WiMAX^{™} media access control. In this way, the source element 12, 14 may generate the following packets of the packet flow with the optimum QoS class for the access network 16. It should be noted that the traffic control device may also be used in the way described above for a non-access network border to optimize network internal flows.

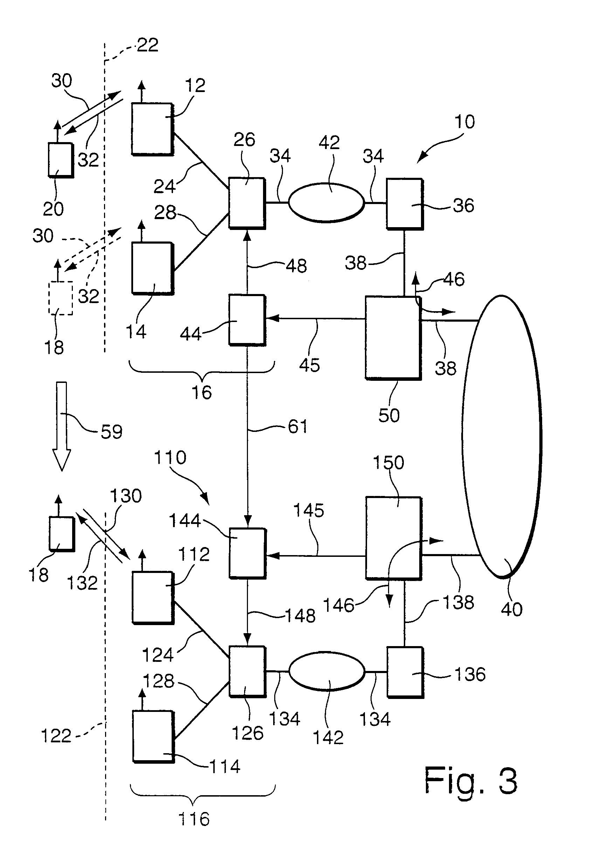

Fig. 3 shows a block diagram with the architecture of two packet-based networks 10, 110 according to a second embodiment of the invention. Therein the two packet-based networks 10, 110 have the same basic structure as illustrated in figure 1 and are connected via a common core network 40. For the second packet-based network 110 same reference numbers as for the first packet-based network 10 are used, with the only difference that a leading 1 has been added. Both packet-based networks 10, 110 serve the same mobile stations 18, 20. Nevertheless, the packet-based networks 10, 110 may use the same or different protocols for the radio interfaces 22, 122 (air interface). Mobile station 18 may move along a path 59 from a first service area of the first packet-based network 10 to a second service area of the second packet-based network 110. When this happens during an ongoing data transmission a handover from the first packet-based network 10 to the second packet-based network 110 is performed. In order to improve an efficiency of the handover, an assignment information which has been previously transmitted to the resource control device 44 or an assignment information or a traffic flow parameter of the traffic control device 50 of the first packet-based network 10 may be copied and sent to the corresponding resource control device 144 or traffic control device 150 of the second packet-based network 110. The copying and submitting to the resource control device 144 or to the traffic control device 150 may be performed, for example, by the traffic control device 50, by the resource control devices 44, 144 or by the wireless access controllers 26, 126. In particular, the assignment information may be transferred directly from the first traffic control device 50 to the second traffic control device 150 over a separate transmission link (not shown) dedicated for this purpose. The assignment information which is transferred may be in particular a QoS class learned by the first traffic control device 50.

The assignment information or the flow parameter may alternatively be transmitted to the resource control device 144 via a signaling network 61, preferably that of the first control path 45. Alternatively, the assignment information may be transmitted to the traffic control device 150 via a signaling network 61, preferably that of the first control path 45. Alternatively, it is also possible to transmit the assignment information via the second transmission line 28 and the second base station 14 of the first packet-based network 10 to the first mobile station 18. The mobile station may then forward the assignment information via the first base station 112 and the first transmission line 126 of the second packet-based network 110 to the wireless access controller 126 of the second packet-based network 110. The wireless access controller 126 may employ this assignment information directly or may forward the assignment information to the resource control device 144 or to the traffic control device 150 of the second packet-based network 110. Based on the received assignment information the resource control device 144 respectively traffic control device 150 of the second packet-based network 110 may then generate and submit its own assignment information, while taking into account own resource- and load-related information and own resource allocation policies. In any case, the second packet-based network 110 comprises means for receiving assignment information from the first packet-based network 10, where the data connection to be handed-over started.

For performing any of the above embodiments of the invention the radio networks 16, 116, the core network 40, and the switching network 42 may be of any type of network which provides a control facility 22 for allocation of network resources. Thus, the radio network 16, 116, the core network 40, and the switching network 42 may be, for example, a satellite network or a terrestrial radio network according to a WiMAX^{™}, a WLAN, a GSM, a UMTS, or a TETRA specification.

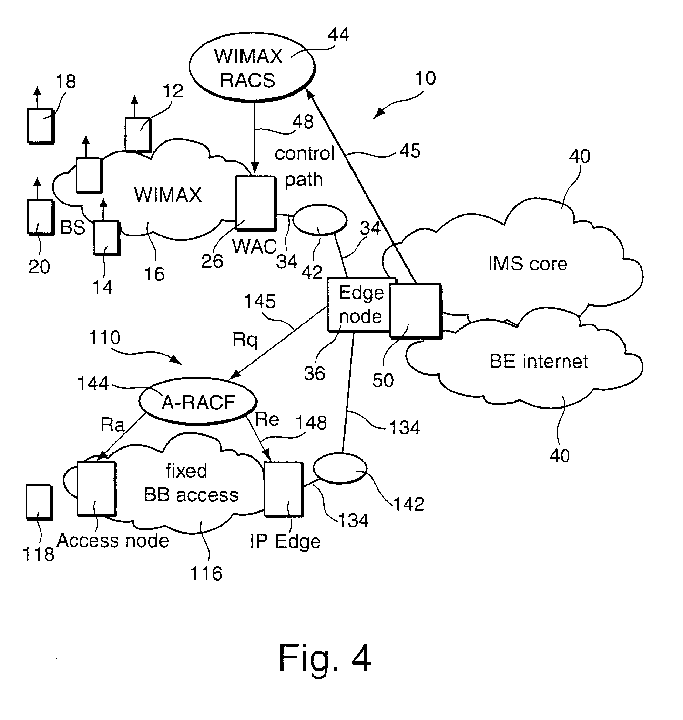

Fig. 4 shows a block diagram with the architecture of two packet-based networks 10, 110 according to another embodiment of the invention. Fig. 4 shows a TISPAN-like fixed access network 116 with an RACS subsystem, which is responsible for controlling quality of service in a NGN/TISPAN network architecture (TISPAN = Telepacket and Internet Converged Services and Protocols for Advanced Networking, RACS = Resource and Admission Control System, NGN = Next Generation Network). A first part of the RACS, which is the A-RACF 144 function, is located in the access network 16 (RACF = Resource Access Control Facility). The second part, which is the SPDF (Service Policy Decision Function), is located on the edge node 36. In addition, a WiMAX^{™} access system 16 is shown in Fig. 4. Both access networks 16, 116 are connected to an IMS core network 40 and to a Best Effort Internet 40 (BE Internet).

Preferably, an additional new control path 45 and resource allocation path 48 are added to access resource management for report of session parameters (5-tuple + QoS; setup, modify, release). As discussed above, soft-states would be only one type of message, potentially with lease time.

According to a preferred embodiment, the network access comprises detection means 52, 152 for packet inspection and extracting of flow description parameters by autonomous machine learning algorithms. Thus, a new self-classifying box 50 for both upstream and downstream traffic may be placed co-located with the edge node 36, which is the most likely position within the network 10, 110. This extra box 50 may also be a functional element of the edge node 36. Machine-learning based means may be used in the network for autonomous classification of traffic flows into parameterized classes, as required for optimized scheduling in the access nodes 26, 126.

According to the invention, an autonomous system is provided to analyze unknown user data traffic streams 46, 146, i.e. without related signaling, for separation into multiple traffic classes and thereby enabling application-specific transport control, respectively media access control. The network access comprises detection means 52, 152 for packet inspection and extracting of flow description parameters. Parameters describing a flow are typically a 5-Tuple information (IP addresses + port numbers) and a class of traffic (e.g. bulk, synchronous streaming) including respective parameters, like a packet rate to reserve bandwidth without signaling from the application, i.e. without SIP (SIP = Session Initiation Protocol, or SDP (SDP = Session Description Protocol).

Upstream traffic inspection may be realized like downstream traffic inspection on the core side of the network. Flow description may be reported as session setup, and an explicit release to the access control means 44, 144 may be issued by a modify message to report parameter changes for a known traffic flow. This may be performed like a re-setup. Flow description may also be realized as soft state with repeated report to the access control means 44, 144. A possibility to detect low priority traffic and adjust a less-then-best-effort class may be provided. The components and functions for realization of the invention may be embedded into an IMS/TISPAN-like access environment with parallel and co-operative support of (IMS) signaled traffic. User-oriented rules and services, AAA rules, and preferences may be taken into account, either within the self-classification means, or as part of the overarching AAA solution. A concept for non-access network border to optimize network-internal flows may also be realized. In particular, handover-support in form of re-use of classification information transferred from one access subsystem 16 to another access subsystem 116 may be provided.

The invention extends the access QoS support to all kinds of Internet applications. Today's access QoS support is limited to signaled (IMS) applications or explicitly-supported applications by means of specific and expensive proxy functions. An access network 16, 50, 116, 150 built according to the invention enables use of multiple media access control classes implicitly oriented on the application's demand, as offered by WiMAX^{™} for different traffic types, like pseudo-synchronous media streaming. The invention addresses a principle challenge, which, for example, occurs when introducing WiMAX^{™}-like access technologies in combination with non-IMS streaming applications, like Internet TV/Video or YouTube. The invention solves today's urging problem of offering services with enhanced quality of service to Internet applications while avoiding the drawback of application-specific proxies. The self-learning concept can deal with any existing application, as well with future applications, and in particular with applications which are still unknown. Protocol changes and vendor-specific variants of application-specific protocols do no longer affect deployed products. Being application-agnostic, the approach even works for encrypted traffic flows. The concept respects the current architecture defined by ETSI/TISPAN and 3GPP^{™} and operates in co-operation with IMS: limits and rules from the common AAA can be taken into consideration, and the same interfaces to the access elements may be used, which allows overarching traffic management (AAA = authentication, authorization and accounting, ETSI = European Telecommunications Standards Institute, 3GPP^{™} = Third Generation Partnership Project). The invention supports flexibility in positioning of the traffic analysis means at any (traversed) point in the access system, including the edge node. This equally applies to upstream traffic as to downstream traffic. Therefore, no support from the client side is required. The fact that the proposed approach does not provide exact traffic parameters is no problem, because exact traffic parameters are not required in real deployments. According to the invention, some time is needed to derive flow related parameters from passing packets. During that time, data packets may be forwarded as usual within the best-effort class. Such a short phase of adaptation to traffic characteristics is tolerable. In such a case the related traffic data flow will be treated different than defined by the operator of the network 10, possibly causing a minor wasting of resources.

The above description of the preferred embodiments has been given by way of example. From the disclosure given, those skilled in the art will not only understand the present invention and its attendant advantages, but will also find apparent various changes and modifications to the structures and methods disclosed. The applicant seeks, therefore, to cover all such changes and modifications as fall within the spirit and scope of the invention, as defined by the appended claims, and equivalents thereof.

### List of reference numbers:

- 10, 110: packet-based network
- 12, 112: first base station
- 14, 114: second base station
- 16, 116: wireless access network
- 18, 118: first customer premises equipment
- 20: second customer premises equipment
- 22, 122: radio interface
- 24, 124: first transmission link
- 26, 126: wireless access controller
- 28, 128: second transmission link
- 30, 130: upstream transmission direction
- 32, 132: downstream transmission direction
- 34, 134: third transmission link
- 36, 136: edge node
- 38, 138: fourth transmission link
- 40: core network
- 42, 142: switch or switching network
- 44, 144: resource control device
- 45, 145: control path
- 46, 146: packet stream
- 48, 148: resource allocation path
- 50, 150: traffic control device
- 52: detection means
- 54: determining means
- 56: assignment means
- 58: sending means
- 59: path from a first service area of a packet-based network
- 61: signaling network

## Claims

1. A traffic control device (50, 150) for a Quality of Service-aware packet-based network (10, 110), comprising:
- detection means (52) for detecting packet flows in a packet stream (46, 146) by preferably repeatedly performing a data packet inspection on the packet stream (46, 146), the data packet inspection being neither based on signaling information nor on application awareness;
- determining means (54) for determining a flow parameter, in particular a flow rate, of at least one of the detected packet flows,
- assignment means (56) for generating assignment information assigning a resource of the packet-based network (10, 110) to the at least one detected packet flow in dependence of the determined flow parameter, and
- sending means (58) for sending the assignment information to a resource control device (44, 144) for causing the resource control device (44, 144) to allocate the assigned resource, the assignment information preferably aging out automatically.

2. The traffic control device (50, 150) according to claim 1, wherein
- the assignment means (56) is adapted to generate the assignment information in dependence of a flow parameter selected from the group consisting of: mean flow rate, minimum flow rate, and maximum flow rate.

3. Packed-based network (10, 110), comprising:
- a core network (40),
- at least one packet access network (16, 116) operatively connected to the core network (40),
- a traffic control device (50, 150) according to claim 1, preferably located at an edge node (36, 136) between the core network (40) and the at least one packet access network (16, 116),
- a resource control device (44, 144) for allocating resources of the packet-based network assigned to packet flows, and
- a control path (45, 145) for operatively connecting the traffic control device (50, 150) to the resource control device (44, 144).

4. The packet-based network (10, 110) according to claim 3, wherein
- the resource control device (44, 144) is adapted to additionally receive signaling information, in particular IMS signaling information, for allocating resources of the packet-based network (10, 110) assigned to signaled packet flows.

5. The packet-based network (10, 110) according to claim 3, wherein
- the resource control device (44, 144) is adapted to allocate a resource assigned to a detected packet flow only for a fixed time interval, the fixed time interval being preferably defined in the assignment information from the traffic control device (50, 150).

6. The packet-based network (10, 110) according to claim 3, wherein
- the resource control device (44) of a first packet access network (16) is adapted to transmit the assignment information to a resource control device (144) of a second packet access network (116) in case that a handover of the packet flow from the first packet access network (16) to the second packet access network (116) occurs.

7. The packet-based network (10, 110) according to claim 3, wherein a first packet access network (16) is a wireless network and a second packet access network (116) is a fixed network.

8. Method for controlling traffic in a Quality of Service-aware packet-based network (10, 110), comprising:
- detecting packet flows in a packet stream (46, 146) by preferably repeatedly performing a data packet inspection on the packet stream (46, 146) in a traffic control device (50, 150), the data packet inspection being neither based on signaling information nor on application awareness;
- determining a flow parameter, in particular a flow rate, of at least one of the detected packet flows,
- generating assignment information assigning a resource of the packet-based network (10, 110) to the at least one detected packet flow in dependence of the determined flow parameter, and
- sending the assignment information to a resource control device (44, 144) for causing the resource control device (44, 144) to allocate the assigned resource, the assignment information preferably aging out automatically after a given time interval.

9. The method according to claim 8, further comprising:
- attributing each detected packet flow to one of a plurality of quality-of-service, QoS, classes in dependence on the determined flow parameter, and
- sending the assignment information comprising the attributed QoS class to the resource control device (44, 144).

10. Computer program product adapted to perform all the steps of the method according to claim 8.

## Amended claims

### Amended claims in accordance with Rule 137(2) EPC.

**1.** A traffic control device (50, 150) for a Quality of Service-aware packet-based network (10, 110), comprising:
- detection means (52) for detecting packet flows in a packet stream (46, 146) by performing a data packet inspection on the packet stream (46, 146), the data packet inspection retrieving 5-tuple information from the header of the data packets of the packet stream (46, 146);
- determining means (54) for determining a flow parameter of at least one of the detected packet flows,
- assignment means (56) for generating assignment information assigning a resource of the packet-based network (10, 110) to the at least one detected packet flow in dependence of the determined flow parameter, and
- sending means (58) for sending the assignment information to a resource control device (44, 144) for causing the resource control device (44, 144) to allocate the assigned resource,
**characterized in that**
the assignment means (56) is adapted to map the flow parameter to at least one policing parameter used by the resource control device (44, 144) to allocate resources for packet flows containing signaling information, and the assignment means (56) is adapted to send the assignment information comprising the policing parameter to the resource control device (44, 144).

**2.** The traffic control device (50, 150) according to claim 1, wherein
- the assignment means (56) is adapted to generate the assignment information in dependence of a flow parameter selected from the group consisting of: mean flow rate, minimum flow rate, and maximum flow rate.

**3.** Packed-based network (10, 110), comprising:
- a core network (40),
- at least one packet access network (16, 116) operatively connected to the core network (40),
- a traffic control device (50, 150) according to claim 1,
- a resource control device (44, 144) for allocating resources of the packet-based network assigned to packet flows, the resource control device (44, 144) being adapted to additionally receive signaling information for allocating resources of the packet-based network (10, 110) to packet flows containing signaling information, and
- a control path (45, 145) for operatively connecting the traffic control device (50, 150) to the resource control device (44, 144).

**4.** The packet-based network (10, 110) according to claim 3, wherein
- the resource control device (44, 144) is adapted to allocate a resource assigned to a detected packet flow only for a fixed time interval.

**5.** The packet-based network (10, 110) according to claim 3, wherein
- the resource control device (44) of a first packet access network (16) is adapted to transmit the assignment information to a resource control device (144) of a second packet access network (116) in case that a handover of the packet flow from the first packet access network (16) to the second packet access network (116) occurs.

**6.** The packet-based network (10, 110) according to claim 3, wherein a first packet access network (16) is a wireless network and a second packet access network (116) is a fixed network.

**7.** Method for controlling traffic in a Quality of Service-aware packet-based network (10, 110), comprising:
- detecting packet flows in a packet stream (46, 146) by preferably repeatedly performing a data packet inspection on the packet stream (46, 146) in a traffic control device (50, 150), the data packet inspection retrieving 5-tuple information from the header of the data packets of the packet stream (46, 146);
- determining a flow parameter of at least one of the detected packet flows,
- generating assignment information assigning a resource of the packet-based network (10, 110) to the at least one detected packet flow in dependence of the determined flow parameter, and
- sending the assignment information to a resource control device (44, 144) for causing the resource control device (44, 144) to allocate the assigned resource
**characterized by**:
- mapping the flow parameter to at least one policing parameter which is used by the resource control device (44, 144) to allocate resources for packet flows containing signaling information, and
- sending the assignment information comprising the policing parameter to the resource control device (44, 144).

**8.** The method according to claim 7, comprising:
- mapping the flow parameter to one of a plurality of quality-of-service, QoS, classes, and
- sending the assignment information comprising the QoS class to the resource control device (44, 144).

**9.** Computer program product adapted to perform all the steps of the method according to claim 8.
